# EUROPEAN PATENT APPLICATION

(11) **EP 4 567 998 A1**
(43) Date of publication of application: **11.06.2025**
(21) Application number: 23905767.2
(22) Date of filing: 12.12.2023
(51) Int. Cl.: H01M 50/434, H01M 50/449, H01M 10/0525

(54) **SEPARATOR FILM, BATTERY AND ELECTRICAL APPARATUS**

(30) Priority: 20.12.2022 CN 202211643850
(71) Applicant: CONTEMPORARY AMPEREX TECHNOLOGY (HONG KONG) LIMITED, Hong Kong (HK)
(72) Inventor: JIN, Haizu, Ningde, Fujian 352100 (CN); XU, Xiaofu, Ningde, Fujian 352100 (CN)
(74) Representative: Jacob, Reuben Ellis
(86) International application number: PCT/CN2023/138187
(87) International publication number: WO 2024/131601

(57) **Abstract**

Provided are a separator film, a battery, and an electrical apparatus. The separator film comprises a separator film substrate, and the separator film substrate satisfies at least one of the following conditions: the separator film substrate comprises a reinforced fiber layer; at least one side surface of the separator film substrate has a reinforced coating.

## Description

### TECHNICAL FIELD

The present disclosure relates to the field of energy, and in particular to, a separator, a battery, and an electric apparatus.

### BACKGROUND

In recent years, with the development of battery technology, the market demand for traction batteries featuring high-power output and fast charge and discharge has become more urgent, and higher requirements for the safety performance of batteries have also been put forward. The separator, as one of the key components of a battery, does not participate in the electrochemical reaction in the battery but plays a crucial role in the safety performance, capacity, and the like of the battery. Currently, there are still many problems to be resolved in the industrial production and application of the separator.

### SUMMARY

According to an aspect of this application, this application provides a separator. The separator includes a separator substrate, and the separator substrate satisfies at least one of the following conditions: the separator substrate includes a reinforced fiber layer; and at least one side surface of the separator substrate has a reinforced coating layer. This can significantly improve the piercing resistance of the separator and reduce the short circuit in the battery caused by dendrites piercing the separator.

According to an embodiment of this application, the separator substrate further includes a high polymer material layer, and the reinforced fiber layer is located on at least one side surface of the high polymer material layer. Therefore, a separator with high piercing resistance can be obtained.

According to an embodiment of this application, the separator substrate further includes multiple high polymer material layers, and the reinforced fiber layer is sandwiched between the multiple high polymer material layers. Therefore, a separator with both good ion conductivity and high piercing resistance can be obtained.

According to an embodiment of this application, the separator substrate is the reinforced fiber layer. Therefore, a separator with high piercing resistance can be obtained.

According to an embodiment of this application, the reinforced fiber layer includes at least one of glass fiber and non-woven fabric. Thus, the piercing resistance of the separator can be further improved.

According to an embodiment of this application, the reinforced fiber layer further includes inorganic particles, and the inorganic particles include at least one of Al₂O₃, γ-AlOOH, SiO₂, ZrO₂, CaO, and MgO. Thus, the piercing resistance of the separator can be further improved.

According to an embodiment of this application, the reinforced coating layer is located on a side surface of the high polymer material layer away from the reinforced fiber layer. Therefore, a separator with high piercing resistance can be obtained.

According to an embodiment of this application, the separator substrate is a high polymer material layer, and the reinforced coating layer is at least located on a side surface of the high polymer material layer. Therefore, a separator with high piercing resistance can be obtained.

According to an embodiment of this application, the reinforced coating layer includes inorganic particles, and the inorganic particles include at least one of Al₂O₃, γ-AlOOH, SiO₂, ZrO₂, CaO, and MgO. Thus, the piercing resistance of the separator can be further improved.

According to an embodiment of this application, the high polymer material layer includes inorganic particles, and the inorganic particles include at least one of Al₂O₃, γ-AlOOH, SiO₂, ZrO₂, CaO, and MgO. Thus, the piercing resistance of the separator can be further improved.

According to an embodiment of this application, an elastic modulus of the separator is 0.1 GPa-100 GPa, and preferably, the elastic modulus of the separator is 0.15 GPa-10 GPa. Therefore, a separator with high piercing resistance can be obtained.

According to an embodiment of this application, a thickness of the separator is 1.5 µm-675 µm, and preferably, the thickness of the separator is 4.0 µm-280 µm. Therefore, a separator with both good ion conductivity and high piercing resistance can be obtained.

According to an embodiment of this application, a thickness of the reinforced fiber layer is 1.0 µm-280 µm; and preferably, the thickness of the reinforced fiber layer is 3.0 µm-260 µm. Thus, the piercing resistance of the separator can be further improved.

According to an embodiment of this application, a thickness of the reinforced coating layer is 0.5 µm-50 µm; and preferably, the thickness of the reinforced coating layer is 1.0 µm-20 µm. Thus, the piercing resistance of the separator can be further improved.

According to an embodiment of this application, a porosity of the separator is 20%-60%, and preferably, the porosity of the separator is 30%-60%. Thus, the ion conductivity effect of the separator can be improved.

According to an embodiment of this application, a pore size of the separator is 0.01 µm-50 µm, and preferably, the pore size of the separator is 0.01 µm-15 µm. Thus, the ion conductivity effect of the separator can be improved.

According to another aspect of this application, this application provides a battery. The battery includes a positive electrode plate, a negative electrode plate, and a separator disposed between the positive electrode plate and the negative electrode plate, where such separator includes the separator described above. Thus, the battery includes all the features and advantages of the foregoing separator, which is not repeated herein.

According to an embodiment of this application, the separator includes a separator substrate, the separator substrate includes a high polymer material layer and a reinforced fiber layer on a side surface of the high polymer material layer, and the reinforced fiber layer faces the negative electrode plate. Thus, in the early growth stage, dendrites can be inhibited, maintaining the original size and shape of the separator, and reducing the short circuit in the battery caused by dendrites piercing the separator.

According to an embodiment of this application, the separator includes a separator substrate, the separator substrate includes a first reinforced fiber layer, a high polymer material layer, and a second reinforced fiber layer that are stacked sequentially, a thickness of the first reinforced fiber layer is not less than a thickness of the second reinforced fiber layer, and the first reinforced fiber layer faces the negative electrode plate. Thus, in the early growth stage, dendrites can be inhibited, maintaining the original size and shape of the separator, and reducing the short circuit in the battery.

According to an embodiment of this application, the separator includes a separator substrate, the separator substrate includes a high polymer material layer, a side surface of the high polymer material layer has a reinforced coating layer, and the reinforced coating layer faces the negative electrode plate. Thus, in the early growth stage, dendrites can be inhibited, maintaining the original size and shape of the separator, and reducing the short circuit in the battery.

According to an embodiment of this application, the separator includes a separator substrate, the separator substrate includes a high polymer material layer, two opposite side surfaces of the high polymer material layer have a first reinforced coating layer and a second reinforced coating layer, a thickness of the first reinforced coating layer is not less than a thickness of the second reinforced coating layer, and the first reinforced coating layer faces the negative electrode plate. Thus, in the early growth stage, dendrites can be inhibited, maintaining the original size and shape of the separator, and reducing the short circuit in the battery.

According to another aspect of this application, this application provides an electric apparatus, and the electric apparatus includes the foregoing battery. Thus, the electric apparatus includes all the features and advantages of the foregoing battery, which is not repeated herein.

### DESCRIPTION OF DRAWINGS

The above and/or additional aspects and advantages of this application will become obvious and easy to understand from the description of some embodiments with reference to the following accompanying drawings.
FIG. 1 is a schematic structural diagram of a separator according to an embodiment of this application;
FIG. 2 is another schematic structural diagram of the separator according to an embodiment of this application;
FIG. 3 is another schematic structural diagram of the separator according to an embodiment of this application;
FIG. 4 is another schematic structural diagram of the separator according to an embodiment of this application;
FIG. 5 is another schematic structural diagram of the separator according to an embodiment of this application;
FIG. 6 is another schematic structural diagram of the separator according to an embodiment of this application;
FIG. 7 is another schematic structural diagram of the separator according to an embodiment of this application;
FIG. 8 is another schematic structural diagram of the separator according to an embodiment of this application;
FIG. 9 is a schematic diagram of a battery according to an embodiment of this application;
FIG. 10 is an exploded view of the battery according to the embodiment of this application in FIG. 9;
FIG. 11 is a schematic diagram of a battery module according to an embodiment of this application;
FIG. 12 is a schematic diagram of a battery pack according to an embodiment of this application;
FIG. 13 is an exploded view of the battery pack according to the embodiment of this application in FIG. 12; and
FIG. 14 is a schematic diagram of an electric apparatus using a battery as a power source according to an embodiment of this application.

### DESCRIPTION OF EMBODIMENTS

The embodiments of this application are described in detail below. Examples of the embodiments are shown in the accompanying drawings, and reference signs that are the same or similar always indicate the same or similar elements or elements with the same or similar functions. The embodiments described below with reference to the accompanying drawings are illustrative and merely for explaining this application, and cannot be construed as any limitations on this application.

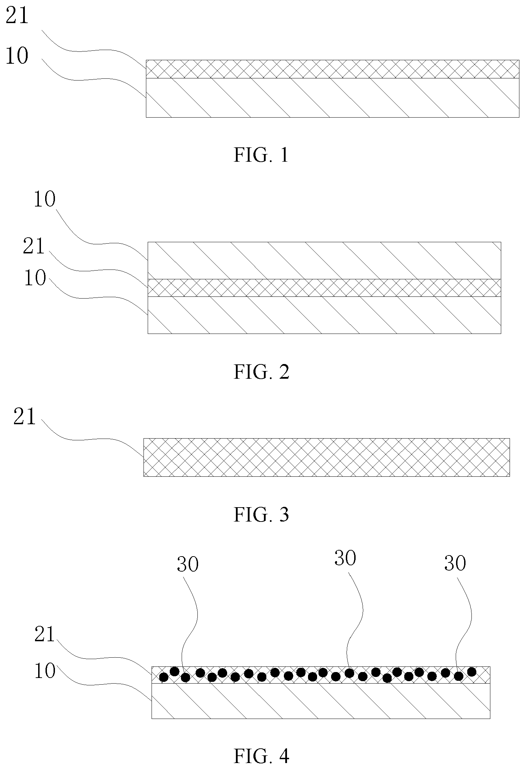

According to an aspect of this application, this application provides a separator. Referring to FIGs. 1 to 8, the separator includes a separator substrate, and the separator substrate satisfies at least one of the following conditions: the separator substrate includes a reinforced fiber layer 21; and/or at least one side surface of the separator substrate has a reinforced coating layer 22. As the reinforced fiber layer and/or the reinforced coating layer is provided, the elastic modulus of the separator can be significantly improved, thereby alleviating the high shear stress caused by dendrites with a higher elastic modulus. This inhibits dendrite growth, improving the piercing resistance of the separator, and reducing the short circuit in the battery caused by dendrites piercing the separator.

In the description of this application, "A and/or B" may include any situation of A alone, B alone, or both A and B, where A and B are merely used as examples and can be any technical feature connected by "and/or" in this application.

According to some embodiments of this application, the structure of the separator is not particularly limited. For example, referring to FIG. 1, the separator substrate may further include a high polymer material layer 10, that is, the separator substrate may include a high polymer material layer 10 and the reinforced fiber layer 21 located on one side surface of the high polymer material layer 10. The arrangement of the reinforced fiber layer can increase the elastic modulus of the separator, thereby effectively reducing the shear stress generated by dendrite growth when the separator is in contact with dendrites, and lowering the possibility of the separator being pierced by the dendrites. In some embodiments, one side surface of the separator with the reinforced fiber layer 21 may face the negative electrode plate, thereby exerting an inhibiting effect in the early growth stage of the dendrites. According to some other embodiments of this application, both side surfaces of the high polymer material layer may be provided with the reinforced fiber layer. The two reinforced fiber layers may have the same or different thicknesses. When the thicknesses of the two reinforced fiber layers are different, the thicker reinforced fiber layer may face the negative electrode plate.

According to some embodiments of this application, the structure of the separator is not particularly limited. For example, referring to FIG. 2, the separator substrate may further include multiple high polymer material layers 10, that is, the separator substrate may include multiple high polymer material layers 10 and the reinforced fiber layer 21 sandwiched between the high polymer material layers. This sandwich design allows the reinforced fiber layer to be encapsulated in the high polymer material layer, reducing the hardness of the separator, thereby improving the processability of the separator and facilitating the production and preparation of the separator as well as the subsequent assembly of the battery.

In the descriptions of this application, "a plurality of" means at least two.

According to some embodiments of this application, the structure of the separator is not particularly limited. For example, referring to FIG. 3, the reinforced fiber may be directly used as the separator substrate, that is, the separator substrate is the reinforced fiber layer 21.

According to some embodiments of this application, the type of the reinforced fiber layer is not particularly limited. For example, the reinforced fiber layer may include at least one of glass fiber and non-woven fabric. Glass fiber and non-woven fabric have excellent electrical insulation properties, meeting the basic insulation requirements of the separator. Glass fiber and non-woven fabric also have advantages such as high tensile strength, good heat resistance, and strong corrosion resistance. They can effectively increase the elastic modulus of the separator and further improve the heat resistance and corrosion resistance of the separator.

According to some embodiments of this application, the type of the high polymer material layer is not particularly limited. For example, the high polymer material layer includes at least one of polyethylene (PE) and polypropylene (PP).

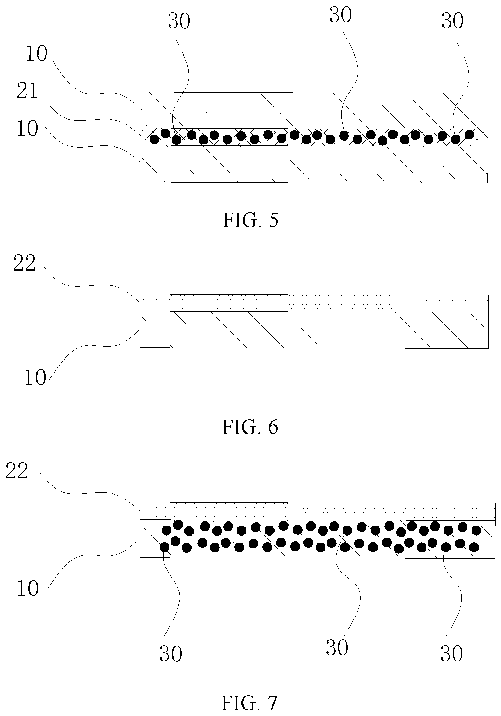

According to some embodiments of this application, the structure of the reinforced fiber layer is not particularly limited. For example, referring to FIGs. 4 and 5, the reinforced fiber layer 21 may further include inorganic particles 30, and the inorganic particles may include at least one of Al₂O₃, γ-AlOOH, SiO₂, ZrO₂, CaO, and MgO. In some embodiments, the inorganic particles may include Al₂O₃ and γ-AlOOH.

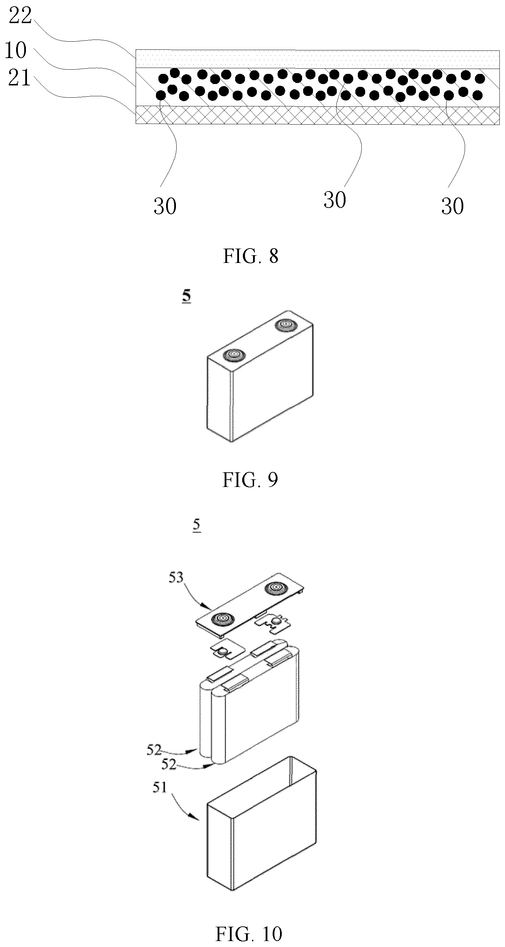

According to some embodiments of this application, the structure of the separator is not particularly limited. For example, referring to FIG. 8, when the separator substrate includes a high polymer material layer 10, the reinforced coating layer 22 may be located on a side surface of the high polymer material layer 10 away from the reinforced fiber layer 21. Therefore, a separator with high piercing resistance can be obtained.

According to some embodiments of this application, the structure of the separator is not particularly limited. For example, referring to FIG. 6, when the separator substrate is the high polymer material layer 10, the reinforced coating layer 22 may be located on at least one side surface of the high polymer material layer 10. The arrangement of the reinforced coating layer can increase the elastic modulus of the separator, thereby effectively reducing the shear stress generated by dendrite growth when the separator is in contact with dendrites, and lowering the possibility of the separator being pierced by the dendrites. In some embodiments, one side surface of the separator with the reinforced coating layer 22 may face the negative electrode plate, thereby exerting an inhibiting effect in the early growth stage of the dendrites. According to some other embodiments of this application, both side surfaces of the high polymer material layer 10 may be provided with the reinforced coating layer 22. The two reinforced coating layers 22 may have the same or different thicknesses. When the thicknesses of the two reinforced coating layers are different, the thicker reinforced coating layer may face the negative electrode plate.

According to some embodiments of this application, the reinforced coating layer may be formed on the surface of the high polymer material layer by controlling the surface spraying process, specifically, the increase of the modulus can be controlled by adjusting the amount of the sprayed solution.

According to some embodiments of this application, the composition of the reinforced coating layer is not particularly limited. For example, the reinforced coating layer may include inorganic particles, and specifically, the inorganic particles include at least one of Al₂O₃, γ-AlOOH, SiO₂, ZrO₂, CaO, and MgO. In some embodiments, the inorganic particles may include at least one of Al₂O₃ and γ-AlOOH. According to some other embodiments of this application, to improve the bonding force between the reinforced coating layer and the adherent film layer, and to enhance the uniformity of the distribution of the inorganic particles in the reinforced coating layer, the reinforced coating layer can further include a dispersant and a binder. Specifically, the dispersant may include at least one of polyvinylpyrrolidone (PVP) and polyacrylamide (PAM); the binder can include at least one of polyvinylidene fluoride (PVDF), carboxymethyl cellulose (CMC), polyvinyl alcohol (PVA), polytetrafluoroethylene (PTFE), styrene-butadiene latex (SBR), and polyimide (PI). Specifically, a mass percentage of the inorganic particles in the reinforced coating layer may be 75-99.7wt%, a mass percentage of the binder may be 0.2-15wt%, and a mass percentage of the dispersant may be 0.1-10wt%.

According to some embodiments of this application, the structure of the separator is not particularly limited. For example, referring to FIGs. 7 and 8, the high polymer material layer may include inorganic particles, and the inorganic particles may include at least one of Al₂O₃, γ-AlOOH, SiO₂, ZrO₂, CaO, and MgO. Thus, the piercing resistance of the separator can be further improved. In some embodiments, the inorganic particles may include at least one of Al₂O₃ and γ-AlOOH. According to some other embodiments of this application, the high polymer material layer containing inorganic particles may be prepared by the electrostatic spinning. For example, the high polymer material and inorganic particles can be mixed in a pre-mixed solution, and then the separator may be prepared by the electrostatic spinning process, making the separator uniformly contain inorganic particles.

According to some embodiments of this application, the elastic modulus of the separator is not particularly limited. For example, the elastic modulus of the separator may be 0.1 GPa-100 GPa; in some embodiments, the elastic modulus of the separator may be 0.15 GPa-10 GPa. When the elastic modulus of the separator is less than 0.1 GPa, dendrites are likely to grow locally to pierce the separator, causing micro-short circuit. This leads to danger such as overheating and failure of the cell, and cannot provide good assurance for the stable operation of the battery. When the elastic modulus of the separator is greater than 100 GPa, the rigidity of the separator is too high and brittleness is significantly increased, making the separator unsuitable for processes requiring high deformation, such as winding, failing to meet the processing requirement. When the elastic modulus of the separator is 0.1 GPa-100 GPa, for a battery system that is not prone to dendrite growth, on the basis of controlling dendrite growth by the electrolyte and the battery system, selecting a separator with a small modulus within the aforementioned range can achieve the protection function against dendrite piercing. For a battery system that is prone to dendrite growth, selecting a separator with a large modulus within the aforementioned range can further effectively reduce the possibility of the separator being pierced by dendrites.

According to some embodiments of this application, the thickness of the separator is not particularly limited. For example, the thickness of the separator may be 0.1-675 µm. In some embodiments, the thickness of the separator may be 4.0 µm-280 µm. When the thickness of the separator is less than 0.1 µm, the elastic modulus of the separator is too small, and the piercing resistance is poor, making it easy for the dendrites to pierce the separator and cause a short circuit. When the thickness of the separator is greater than 675 µm, the separator is too thick, resulting in poor ion conductivity effect and significantly reducing the energy density of the battery.

According to some embodiments of this application, the thickness of the reinforced fiber layer may be 1.0 µm-280 µm. In some embodiments, the thickness of the reinforced fiber layer may be 3.0 µm-260 µm. When the thickness of the reinforced fiber layer is within the above range, the reinforced fiber layer can be combined with the high polymer material layer to form a separator substrate, thereby obtaining a positive electrode material with both excellent ion conductivity and high elastic modulus. The reinforced fiber layer can also be used alone as a separator, such that a separator with good piercing resistance can be obtained from a single structure.

According to some embodiments of this application, when the reinforced coating layer is provided on the surface of the high polymer material layer, the thickness of the reinforced coating layer may be 0.5 µm-50 µm. In some embodiments, the thickness of the reinforced coating layer may be 1.0 µm-20 µm. When the thickness of the reinforced coating layer is less than 0.5 µm, it is difficult to form a coating layer with a highly consistent thickness and inorganic particles dispersed uniformly, and there are more regions on the reinforced coating layer that do not have piercing resistance. When the thickness of the reinforced coating layer is greater than 50 µm, the overall porosity of the separator significantly decreases, the ion conductivity effect deteriorates, and the internal resistance of the battery significantly increases.

According to some embodiments of this application, the structure of the separator is not particularly limited. For example, the porosity of the separator may be 20%-60%. In some embodiments, the porosity of the separator may be 30%-60%, and the pore size of the separator may be 0.01 µm-50 µm. In some embodiments, the pore size of the separator may be 0.01 µm-15 µm. When the porosity of the separator is 20%-60% and the pore size is 0.01 µm-50 µm, the separator can meet the requirements for ion passage and can also prevent the dendrites from directly penetrating or piercing the separator.

In this application, whether or not words like "approximately" or "about" are used, all disclosed numbers are approximate values. Each numerical value may have a variance of less than 10% or a reasonable variance as recognized by those skilled in the art, such as 1%, 2%, 3%, 4%, or 5% variance.

According to another aspect of this application, this application provides a battery. The battery includes a positive electrode plate, a negative electrode plate, and a separator disposed between the positive electrode plate and the negative electrode plate. During charge and discharge of the battery, active ions intercalate and deintercalate back and forth between the positive electrode plate and the negative electrode plate. The separator is disposed between the positive electrode plate and the negative electrode plate for separation. The battery further includes an electrolyte, and the electrolyte conducts ions between the positive electrode plate and the negative electrode plate. Thus, the battery includes all the features and advantages of the foregoing separator, which is not repeated herein.

According to some embodiments of this application, to further enhance the effect of the separator inhibiting dendrite growth, when the surface of the separator has a reinforced fiber layer and/or a reinforced coating layer structure, the reinforced fiber layer and/or reinforced coating layer may face the negative electrode plate of the battery. This helps to inhibit the growth of the dendrites in an early stage, maintain the original size and shape of the separator, and reduce the short circuit in the battery.

According to some embodiments of this application, the separator includes a separator substrate. When the separator substrate includes a high polymer material layer and a reinforced fiber layer on one side surface of the high polymer material layer, and the reinforced fiber layer may face the negative electrode plate. Thus, the arrangement of the reinforced fiber layer can increase the elastic modulus of the separator, effectively reducing the shear stress generated by dendrite growth when the separator comes into contact with the dendrites in the early growth stage of the dendrites, so as to reduce the possibility of the separator being pierced by the dendrites.

According to some embodiments of this application, the separator includes a separator substrate. The separator substrate includes a first reinforced fiber layer, a high polymer material layer, and a second reinforced fiber layer that are sequentially stacked, with the high polymer material layer sandwiched between the two reinforced fiber layers. When the thickness of the first reinforced fiber layer is equal to the thickness of the second reinforced fiber layer, either the first reinforced fiber layer or the second reinforced fiber layer may face the negative electrode plate. For example, the first reinforced fiber layer may face the negative electrode plate. When the thickness of the first reinforced fiber layer is greater than that of the second reinforced fiber layer, the first reinforced fiber layer may be enabled to face the negative electrode plate. Within a certain range, the thickness of the reinforced fiber layer is positively correlated with the elastic modulus of the reinforced fiber layer. As the thicker reinforced fiber layer faces the negative electrode plate, the shear stress generated by dendrite growth can be reduced more effectively, thus reducing the possibility of the separator being pierced by dendrites.

According to some embodiments of this application, the separator includes a separator substrate. When the separator substrate includes a high polymer material layer and one side surface of the high polymer material layer has a reinforced coating layer, the reinforced coating layer may face the negative electrode plate. Thus, the arrangement of the reinforced coating layer can increase the elastic modulus of the separator, effectively reducing the shear stress generated by dendrite growth when the separator comes into contact with the dendrites in the early growth stage of the dendrites, so as to reduce the possibility of the separator being pierced by the dendrites.

According to some embodiments of this application, the separator includes a separator substrate. When the separator substrate includes a high polymer material layer, and the two opposite side surfaces of the high polymer material layer have a first reinforced coating layer and a second reinforced coating layer, the high polymer material layer is sandwiched between the two reinforced coating layers. When the thickness of the first reinforced coating layer is equal to the thickness of the second reinforced coating layer, either the first reinforced coating layer or the second reinforced coating layer may be selected to face the negative electrode plate. For example, the first reinforced coating layer may face the negative electrode plate. When the thickness of the first reinforced coating layer is greater than that of the second reinforced coating layer, the first reinforced coating layer may be enabled to face the negative electrode plate. Within a certain range, the thickness of the reinforced coating layer is positively correlated with the elastic modulus of the reinforced coating layer. As the thicker reinforced coating layer faces the negative electrode plate, the shear stress generated by dendrite growth can be reduced more effectively, thus reducing the possibility of the separator being pierced by dendrites.

The battery is a battery that can be charged after being discharged, to activate active materials for continuous use. In the battery, the positive electrode plate typically includes a positive current collector and a positive electrode film layer disposed on the positive current collector, where the positive electrode film layer includes a positive electrode active material. Typically, a common metal foil sheet or a composite current collector may serve as the positive electrode current collector (for example, the composite current collector may be formed by providing a metal material on a polymer matrix). For example, an aluminum foil may serve as the positive current collector.

According to some embodiments of this application, the battery may be a lithium-ion secondary battery, a sodium-ion secondary battery, a magnesium-ion secondary battery, or the like.

According to some embodiments of this application, the specific type of positive active material is not limited and may be the active material known in the art that can be used for the positive electrode of the battery. Those skilled in the art can select it based on actual needs. For example, when the battery is a lithium-ion battery, the positive active material may include, but is not limited to, one or more of lithium transition metal oxide, olivine-structured lithium-containing phosphate, and their respective modified compounds. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available. When the battery is a sodium-ion battery, the positive active material may include one or more of sodium transition metal oxide, sodium polyanionic compound, and Prussian blue-type sodium compound, and their respective modified compounds. Specifically, the transition metal oxide may satisfy the chemical formula NaₓMO₂ (0<x≤1, M is a transition metal element, including at least one of vanadium (V), chromium (Cr), manganese (Mn), iron (Fe), cobalt (Co), nickel (Ni), and copper (Cu)). The polyanionic compound may satisfy the chemical formula NaₓM_{y}[(XOₘ)ⁿ⁻], where M is metal ions with a variable valence state, including elements such as iron, vanadium, and cobalt, and the anions (XOₘ)ⁿ⁻ include phosphate, pyrophosphate, fluorophosphate, and sulfate. The Prussian blue-type compound may satisfy the chemical formula NaₓM_{A}[M_{B}(CN)₆]zH₂O, where M_{A} and M_{B} are transition metal ions. The modified compounds of the foregoing materials may be obtained through doping modification and/or surface coating modification to the materials.

According to some embodiments of this application, the positive electrode film layer also optionally includes a binder, a conductive agent, and another optional auxiliary agent. For example, the conductive agent may be one or more of superconducting carbon, acetylene black, carbon black, Ketjen black, carbon dot, carbon nanotube, Super P (SP), graphene, and carbon nanofiber. The binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In the battery, the negative electrode plate typically includes a negative electrode current collector and a negative electrode film layer provided on the negative electrode current collector, where the negative electrode film layer includes a negative electrode active material. A common metal foil sheet or a composite current collector may serve as the negative electrode current collector (for example, the composite current collector may be formed by providing a metal material on a polymer matrix). For example, a copper foil may serve as the negative current collector.

According to some embodiments of this application, the specific type of negative active material is not limited and may be the active material known in the art that can be used for the negative electrode of the battery. Those skilled in the art can select it based on actual needs. In an example, the negative electrode active material may include but is not limited to one or more of artificial graphite, natural graphite, hard carbon, soft carbon, silicon-based material, and tin-based material. The silicon-based material may be selected from one or more of elemental silicon, silicon-oxygen compound (for example, silicon monoxide), silicon-carbon compound, silicon-nitrogen compound, and silicon alloy. The tin-based material may be selected from one or more of elemental tin, tin-oxygen compound, and tin alloy. These materials are all commercially available.

According to some embodiments of this application, the negative electrode film layer also optionally includes a binder, a conductive agent, and another optional auxiliary agent. For example, the conductive agent may be one or more of superconducting carbon, acetylene black, carbon black, Ketjen black, carbon dot, carbon nanotube, graphene, and carbon nanofiber. The binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB). The another optional auxiliary agent may be a thickening and dispersant (for example, sodium carboxymethyl cellulose CMC-Na) and a PTC thermistor material.

According to some embodiments of this application, the embodiments of this application do not impose special limitations on the shape of the battery, and the battery may be cylindrical, rectangular, or of any other shapes. FIG. 9 shows a rectangular battery 5 as an example. Specifically, referring to FIG. 10, the outer package may include a shell 51 and a cover plate 53. The shell 51 may include a base plate and side plates connected to the base plate, and the base plate and the side plates enclose an accommodating cavity. The shell 51 has an opening communicating with the accommodating cavity, and the cover plate 53 can cover the opening to close the accommodating cavity. The positive electrode plate, the negative electrode plate, and the separator may be made into an electrode assembly 52 through winding or stacking. The electrode assembly 52 is enclosed in the accommodating cavity. The liquid electrolyte infiltrates the electrode assembly 52. The battery 5 may include one or more electrode assemblies 52, and persons skilled in the art may make choices based on actual requirements.

According to some embodiments of this application, the battery may include an outer package. The outer package is used for packaging a positive electrode plate, a negative electrode plate, and an electrolyte.

According to some embodiments of this application, the outer package may include a shell and a cover plate. The shell may include a base plate and side plates connected onto the base plate, and the base plate and the side plates enclose an accommodating cavity. The shell has an opening communicating with the accommodating cavity, and the cover plate can cover the opening to close the accommodating cavity. A positive electrode plate, a negative electrode plate, and a separator may be made into an electrode assembly through winding or stacking. The electrode assembly is packaged in the accommodating cavity. The electrolyte may be a liquid electrolyte, and the liquid electrolyte infiltrates the electrode assembly. There may be one or more electrode assemblies in the battery, and the quantity may be adjusted as required.

According to some embodiments of this application, the outer package of the battery may be a hard shell, such as, a hard plastic shell, an aluminum shell, or a steel shell. The outer package of the battery may alternatively be a soft pack, for example, a soft pouch. A material of the soft package may be plastic, for example, may include one or more of polypropylene (PP), polybutylene terephthalate (PBT), and polybutylene succinate (PBS).

According to some embodiments of this application, the battery may be assembled as a battery module, and the battery module may include a plurality of batteries. The specific quantity may be adjusted based on use and capacity of the battery module.

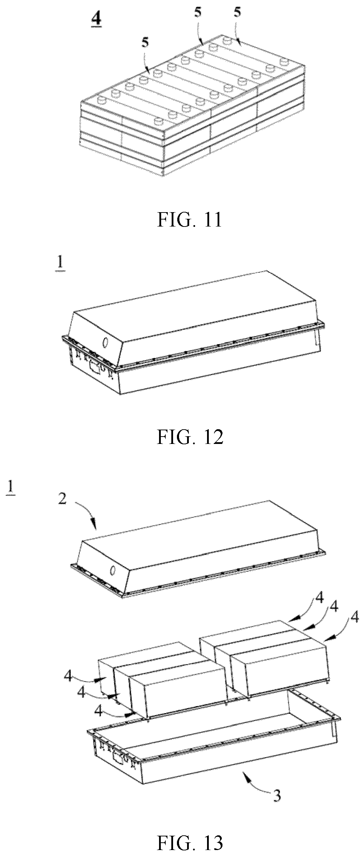

FIG. 11 shows a battery module 4 as an example. Referring to FIG. 11, in the battery module 4, a plurality of batteries 5 may be sequentially arranged in a length direction of the battery module 4. Certainly, the batteries may alternatively be arranged in any other manner. Further, the plurality of batteries 5 may be fastened through fasteners. The battery module 4 may alternatively include a housing with an accommodating space, and the plurality of secondary batteries 5 are accommodated in the accommodating space.

The battery module 4 may alternatively include a housing with an accommodating space, and the plurality of secondary batteries 5 are accommodated in the accommodating space. In some embodiments, the battery module may be further assembled into a battery pack, and a quantity of battery modules included in the battery pack may be adjusted based on application and capacity of the battery pack.

According to some embodiments of this application the battery module may be also assembled into a battery pack, and the battery pack may include one or more battery modules. The specific quantity may be chosen by persons skilled in the art according to use and capacity of the battery pack. FIGs. 12 and 13 show a battery pack 1 as an example. Referring to FIGs. 12 and 13, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

According to another aspect of this application, this application provides an electric apparatus, and the electric apparatus includes the foregoing battery, where the battery is configured to provide electric energy. Specifically, the battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto. The battery, the battery module, or the battery pack may be selected for the electric apparatus based on the use requirements thereof.

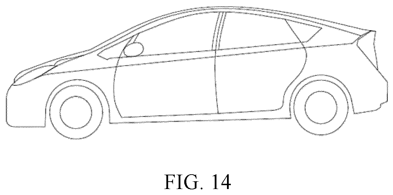

According to some embodiments of this application, FIG. 14 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the battery, a battery pack or a battery module may be used.

According to some embodiments of this application, the electric apparatus may also be a mobile phone, a tablet, a notebook computer, or the like. Such apparatus is typically required to be light and thin and may use a battery as its power source.

The following specific embodiments are provided to describe the solutions of this application. It should be noted that these embodiments are merely illustrative and should not be considered as limiting the scope of this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

The separators in Examples 1 to 5, Comparative Example 1, and Comparative example 2 are all assembled into lithium-ion batteries. The preparation method of the lithium-ion battery is as follows:

### (1). Preparation of positive electrode plate

A positive electrode active material lithium nickel cobalt manganese oxide (LFP), a conductive agent carbon black, and a binder polyvinylidene fluoride (PVDF) were mixed to uniformity at a weight ratio of 95:3:2 to obtain a positive electrode slurry. The positive electrode slurry was evenly applied to both surfaces of a positive electrode current collector aluminum foil and then dried to obtain a film layer, followed by cold pressing and slitting to obtain a positive electrode plate.

### (2) Preparation of negative electrode plate

A carbon nanotube dispersion was stirred into a negative electrode slurry with a viscosity range of 2000-10000 mPa·s. The negative electrode slurry was evenly applied to both surfaces of a negative electrode current collector copper foil, followed by drying, cold pressing, and slitting to obtain a negative electrode plate.

### (3) Separator

Separator substrates in Examples 1-4 were a high polymer material layer, polyethylene. A reinforced coating layer was formed on one side surface of the high polymer material through a spraying process, where the inorganic particles were aluminum oxide. The thickness of the reinforced coating layer is shown in Table 1. The separator substrate in Example 5 was a reinforced fiber layer, glass fiber. The thickness of the reinforced fiber layer is shown in Table 1.

Comparative examples 1 and 2 were kept the same as Example 1, except that in Comparative example 1, the reinforced coating layer was not provided, and in Comparative example 2, the thickness of the reinforced coating layer was 0.3 µm.

### (4) Preparation of electrolyte

In an argon atmosphere glove box (H₂O<0.1 ppm, O₂<0.1 ppm), ethylene carbonate (EC) and ethyl methyl carbonate (EMC) were mixed to uniformity at a volume ratio of 3:7 to obtain an organic solvent. Lithium salt LiPF₆ was dissolved in the organic solvent to prepare a 1-M concentration solution, thus obtaining an electrolyte.

### (5) Preparation of battery

The prepared positive electrode plate, separator, and negative electrode plate were stacked in sequence, such that the separator was sandwiched between the positive electrode plate and negative electrode plate to provide separation. In Examples 1-4 and Comparative example 2, the side surface of the separator with the reinforced coating layer faced the negative electrode plate. Then the resulting stack was wound to obtain a jelly roll. The jelly roll was welded with a tab and packaged into an aluminum shell, followed by baking for water removal at 80°C, injection with the electrolyte, and sealing, to obtain a non-charged battery. The non-charged battery was subjected to processes such as standing, hot and cold compressing, formation, shaping, and capacity testing, to obtain a lithium-ion battery product.

The separators in Examples 6 to 10, Comparative Example 3, and Comparative example 4 are all assembled into sodium-ion batteries. The preparation method of the sodium-ion battery is as follows:

### (1). Preparation of positive electrode plate

A positive electrode active material sodium vanadium phosphate, a conductive agent carbon black, and a binder polyvinylidene fluoride (PVDF) were mixed to uniformity at a weight ratio of 95:3:2 to obtain a positive electrode slurry. The positive electrode slurry was evenly applied to both surfaces of a positive electrode current collector aluminum foil and then dried to obtain a film layer, followed by cold pressing and slitting to obtain a positive electrode plate.

### (2) Preparation of negative electrode plate

A carbon nanotube dispersion was stirred into a negative electrode slurry with a viscosity range of 2000-10000 mPa·s. The negative electrode slurry was evenly applied to both surfaces of a negative electrode current collector copper foil, followed by drying, cold pressing, and slitting to obtain a negative electrode plate.

### (3) Separator

Separator substrates in Examples 6-9 were a high polymer material layer, polyethylene. A reinforced coating layer was formed on one side surface of the high polymer material through a spraying process, where the inorganic particles were aluminum oxide. The thickness of the reinforced coating layer is shown in Table 1. The separator substrate in Example 10 was a reinforced fiber layer, which was glass fiber. The thickness of the reinforced fiber layer is shown in Table 1. Comparative examples 3 and 4 were kept the same as Example 6, except that in Comparative example 3, the reinforced coating layer was not provided, and in Comparative example 4, the thickness of the reinforced coating layer was 0.3 µm.

### (4) Preparation of electrolyte

In an argon atmosphere glove box (H₂O<0.1 ppm, O₂<0.1 ppm), sodium salt NaPF₆ was dissolved in organic solvent diethylene glycol dimethyl ether (DEGDME) to prepare a 1-M concentration solution, thus obtaining an electrolyte.

### (5) Preparation of battery

The prepared positive electrode plate, separator, and negative electrode plate were stacked in sequence, such that the separator was sandwiched between the positive electrode plate and negative electrode plate to provide separation. In Examples 6-9 and Comparative example 4, the side surface of the separator with the reinforced coating layer faced the negative electrode plate. Then the resulting stack was wound to obtain a jelly roll. The jelly roll was welded with a tab and packaged into an aluminum shell, followed by baking for water removal at 80°C, injection with the electrolyte, and sealing, to obtain a non-charged battery. The non-charged battery was subjected to processes such as standing, thermal compressing, formation, shaping, and capacity testing, to obtain a sodium-ion battery product.

The separators in Examples 1-10 and Comparative examples 1-4 were subjected to an elastic modulus test and an abnormal charge test. The test results are shown in Table 1. Test method is as follows:
Elastic modulus test: A biaxial tensile testing machine was used to perform proportional loading on cross-shaped notched specimens, thereby obtaining load-strain curves of the separator in warp and weft directions under different loading conditions. The elastic moduli of the separator in the warp and weft directions were then calculated. The cross-shaped notched specimens were sampled symmetrically according to the warp and weft directions of the separator, and the arm width of the core region of the specimen and the length of the cantilever arm were no less than 160 mm. Uniform notching at intervals of 30 mm to 50 mm was performed along the cantilever direction, with the transition arc radius of the specimen being 5 mm to 15 mm. At least three specimens were selected from the same batch of separators for the test. Deformation control or force control could be applied in the measurement test. For deformation control, a constant rate of stretching should be maintained, taken as 2 to 10 mm/min. For force control, a constant force increase rate should be maintained, taken as 1 to 10 kN/m/min. The specific steps included fixing the specimen on the biaxial tensile testing machine and measuring the load-strain values according to the following steps:
1. The tensile load ratio of the specimen in the warp and weft directions was maintained at 1:1, and the specimen was stretched along the standard tensile axis at a constant rate or constant force increase rate until the load reached 1/4 of the tensile strength (when the tensile strengths of the separator in the warp and weft directions differed, 1/4 of the lower value was taken as the maximum load for the test). The strains in the warp and weft directions of the core region of the specimen were measured, with the initial gauge length ranging from 20 mm to 80 mm. The tensile load was taken as the average engineering stress in the warp and weft directions, and the load-strain curve was recorded at this time.
2. After loaded, the specimen was immediately unloaded. During the unloading process, the same load ratio and rate as during the loading process were maintained. When the load reached 0, the previous step was immediately repeated.
3. The above steps were repeated three times.
4. The loading test was conducted in the first load ratio according to the load ratio sequence in the following table, and the load-strain curve was recorded for elastic modulus calculation. The first three test steps were repeated, the loading test in the second load ratio was conducted, and the load-strain curve was recorded for elastic modulus calculation. The above cycle was repeated until tests in five load ratios were completed (warp direction: weft load ratios were sequentially (1:1), (2:1), (1:2), (1:0), (0:1)). The standard tensile axis was aligned with the direction of the greater load. When the load ratio was 1:1, it was aligned with the warp direction.

Abnormal charge test: The proportion of batteries with abnormal charge capacity reflected the piercing resistance of the separator. Specifically, ten batteries were assembled using the same type of separator. The batteries were charged and discharged at 0.33C within the operating voltage range to calibrate C₀. Then, 1C charge and 0.1C charge were performed to determine whether there was any internal short circuit.

**Table 1**

| Number | Separator parameter | | | | 1C capacity loss rate | 0.1C capacity loss rate |
|---|---|---|---|---|---|---|
| | Separator substrate | Separator substrate thickness (µm) | Reinforced coating layer thickness (µm) | Elastic modulus (GPa) | X/10 battery samples | X/10 battery samples |
| Comparative example 1 | PE | 25 | 0 | 0.2 | 8/10 | 9/10 |
| Comparative example 2 | PE | 25 | 0.3 | 0.4 | 4/10 | 5/10 |
| Example 1 | PE | 25 | 0.5 | 0.5 | 0/10 | 2/10 |
| Example 2 | PE | 25 | 1 | 0.7 | 0/10 | 0/10 |
| Example 3 | PE | 25 | 2 | 1.0 | 0/10 | 0/10 |
| Example 4 | PE | 25 | 5 | 1.0 | 0/10 | 0/10 |
| Example 5 | Glass fiber | 260 | \ | 67.0 | 0/10 | 0/10 |
| Comparative example 3 | PE | 25 | 0 | 0.2 | 7/10 | 8/10 |
| Comparative example 4 | PE | 25 | 0.3 | 0.4 | 4/10 | 4/10 |
| Example 6 | PE | 25 | 0.5 | 0.5 | 0/10 | 0/10 |
| Example 7 | PE | 25 | 1 | 0.7 | 0/10 | 0/10 |
| Example 8 | PE | 25 | 2 | 1.0 | 0/10 | 0/10 |
| Example 9 | PE | 25 | 5 | 1.0 | 0/10 | 0/10 |
| Example 10 | Glass fiber | 260 | \ | 67.0 | 0/10 | 0/10 |

The test results indicate that as the reinforced coating layer is disposed on the surface of the high polymer material layer, the elastic modulus of the separator can be significantly increased, thereby reducing the short circuit in the battery caused by dendrite growth. The use of the separator substrate containing a reinforced fiber layer can significantly increase the elastic modulus of the separator, thereby reducing the short circuit in the battery caused by dendrite growth.

Unless otherwise specified, all scientific and technical terms used in this application have the same meaning as commonly understood by persons skilled in the field to which this application pertains. All patents and publications referred to in this application are incorporated by reference in their entirety. The term "comprise" or "include" is an open-ended expression, meaning that it includes the content specified in this application but does not exclude other aspects of the content.

In the description of this specification, the terms such as "an embodiment" and "another embodiment" mean that a specific feature, structure, material or characteristic described with reference to the embodiment is included in at least one embodiment of this application. In this specification, the illustrative expressions of these terms do not necessarily refer to the same embodiment or example. In addition, the specific feature, structure, material or characteristic described can be combined in any appropriate manner in any one or more embodiments or examples. Besides, without mutual conflict, persons skilled in the art can incorporate and combine different embodiments or examples and features of the different embodiments or examples described in this specification. In addition, it should be noted that the terms "first" and "second" in this specification are merely for the purpose of description, and shall not be understood as any indication or implication of relative importance or any implicit indication of the number of technical features indicated.

Although the examples of this application have been shown and described, it is understood that these example are illustrative and should not be construed as limitations on this application. A person of ordinary skill in the art can make changes, modifications, substitutions, and transformations to the examples within the scope of this application.

## Claims

1. A separator, wherein the separator comprises a separator substrate, and the separator substrate satisfies at least one of the following conditions:
the separator substrate comprises a reinforced fiber layer; and
at least one side surface of the separator substrate has a reinforced coating layer.

2. The separator according to claim 1, wherein the separator substrate further comprises a high polymer material layer, and the reinforced fiber layer is located on at least one side surface of the high polymer material layer.

3. The separator according to claim 1, wherein the separator substrate further comprises multiple high polymer material layers, and the reinforced fiber layer is sandwiched between the multiple high polymer material layers.

4. The separator according to claim 1, wherein the separator substrate is the reinforced fiber layer.

5. The separator according to any one of claims 1 to 4, wherein the reinforced fiber layer comprises at least one of glass fiber and non-woven fabric.

6. The separator according to claim 5, wherein the reinforced fiber layer further comprises inorganic particles, and the inorganic particles comprise at least one of Al₂O₃, γ-AlOOH, SiO₂, ZrO₂, CaO, and MgO.

7. The separator according to claim 2 or 3, wherein the reinforced coating layer is located on a side surface of the high polymer material layer away from the reinforced fiber layer.

8. The separator according to claim 1, wherein the separator substrate is a high polymer material layer, and the reinforced coating layer is at least located on a side surface of the high polymer material layer.

9. The separator according to claim 1, wherein the reinforced coating layer comprises inorganic particles, and the inorganic particles comprise at least one of Al₂O₃, γ-AlOOH, SiO₂, ZrO₂, CaO, and MgO.

10. The separator according to claim 2, 3 or 8, wherein the high polymer material layer comprises inorganic particles, and the inorganic particles comprise at least one of Al₂O₃, γ-AlOOH, SiO₂, ZrO₂, CaO, and MgO.

11. The separator according to any one of claims 1 to 10, wherein an elastic modulus of the separator is 0.1 GPa-100 GPa, and preferably, the elastic modulus of the separator is 0.15 GPa-10 GPa.

12. The separator according to any one of claims 1 to 11, wherein a thickness of the separator is 1.5 µm-675 µm, and preferably, the thickness of the separator is 4.0 µm-280 µm.

13. The separator according to claim 12, wherein a thickness of the reinforced fiber layer is 1.0 µm-280 µm; and preferably, the thickness of the reinforced fiber layer is 3.0 µm-260 µm.

14. The separator according to claim 12, wherein a thickness of the reinforced coating layer is 0.5 µm-50 µm; and preferably, the thickness of the reinforced coating layer is 1.0 µm-20 µm.

15. The separator according to any one of claims 1 to 14, wherein a porosity of the separator is 20%-80%, and preferably, the porosity of the separator is 30%-60%.

16. The separator according to any one of claims 1 to 15, wherein a pore size of the separator is 0.01 µm-50 µm, and preferably, the pore size of the separator is 0.01 µm-15 µm.

17. A battery, wherein the battery comprises a positive electrode plate, a negative electrode plate, and a separator disposed between the positive electrode plate and the negative electrode plate, wherein such separator comprises the separator according to any one of claims 1 to 16.

18. The battery according to claim 17, wherein the separator comprises a separator substrate, the separator substrate comprises a high polymer material layer and a reinforced fiber layer on a side surface of the high polymer material layer, and the reinforced fiber layer faces the negative electrode plate.

19. The battery according to claim 17, wherein the separator comprises a separator substrate, the separator substrate comprises a first reinforced fiber layer, a high polymer material layer, and a second reinforced fiber layer that are stacked sequentially, a thickness of the first reinforced fiber layer is not less than a thickness of the second reinforced fiber layer, and the first reinforced fiber layer faces the negative electrode plate.

20. The battery according to claim 17, wherein the separator comprises a separator substrate, the separator substrate comprises a high polymer material layer, a side surface of the high polymer material layer has a reinforced coating layer, and the reinforced coating layer faces the negative electrode plate.

21. The battery according to claim 17, wherein the separator comprises a separator substrate, the separator substrate comprises a high polymer material layer, two opposite side surfaces of the high polymer material layer have a first reinforced coating layer and a second reinforced coating layer, a thickness of the first reinforced coating layer is not less than a thickness of the second reinforced coating layer, and the first reinforced coating layer faces the negative electrode plate.

22. An electric apparatus, wherein the electric apparatus comprises the battery according to any one of claims 17 to 21.
